## Europäisches Patentamt
## European Patent Office
## Office européen des brevets

(11) Numéro de publication: **0124418 B1**

(12) **FASCICULE DE BREVET EUROPEEN**

(45) Date de publication du fascicule du brevet:
**20.11.86**

(51) Int. Cl.⁴: **B 62 D 5/04**

(21) Numéro de dépôt: **84400777.3**

(22) Date de dépôt: **18.04.84**

(54) Mécanisme de direction assistée électrique du type à pignon et crémaillère, pour véhicule automobile.

(30) Priorité: **28.04.83 ES 522273**

(43) Date de publication de la demande:
**07.11.84 Bulletin 84/45**

(45) Mention de la délivrance du brevet:
**20.11.86 Bulletin 86/47**

(84) Etats contractants désignés:
**DE FR GB IT**

(56) Documents cités:
**EP - A - 0 101 579**
**FR - A - 2 147 475**
**FR - A - 2 365 470**
**GB - A - 1 410 956**
**US - A - 1 231 885**
**US - A - 3 161 074**

(73) Titulaire: **BENDIX ESPANA S.A., Balmes 243, Barcelona 6 (ES)**

(72) Inventeur: **Mansilla Anguera, Narcisso, Calle Galileo 337 6o 4a, Barcelona 28 (ES)**

(74) Mandataire: **Le Moenner, Gabriel et al, SERVICE BREVETS BENDIX 44, Rue François 1er, F-75008 Paris (FR)**

ACTORUM AG

## Description

La présente invention concerne les mécanismes de direction assistée électriques pour véhicules et plus particulièrement, un mécanisme de direction assistée électrique du type comprenant: dans un boîtier de direction une structure de crémaillère destinée à être reliée à un système d'orientation de roues directionnelles du véhicule, un pignon couplé à un organe rotatif d'entrée et engrenant avec des indentations de la structure de crémaillère et un moteur électrique rotatif d'assistance ayant un organe de sortie coopérant avec des gorges hélicoïdales formées sur une partie cylindrique de la structure de crémaillère via un mécanisme à écrou tournant et à circuit de billes pour déplacer la structure de crémaillère, et un moyen de capteur sensible à l'actionnement de l'organe d'entrée pour commander sélectivement le moteur électrique.

Un mécanisme de direction assistée de ce type est décrit dans le document EP-A-0 101 579 publié le 29 Février 1984 [état de la technique selon Article 54(3)CBE].

Dans le mécanisme de ce document, la structure de crémaillère, de configuration massive, comporte deux portions distinctes formées respectivement avec des gorges hélicoïdales et avec des dentures rectilignes engrenant avec le pignon.

La présente invention a pour objet de proposer un mécanisme de direction assistée électrique du type susmentionné, de structure légère, compacte, ne nécessitant qu'un nombre réduit d'éléments constitutifs, présentant une inertie faible et de faibles coûts de fabrication.

Pour ce faire, selon l'invention, le pignon est un pignon globoïde engrenant avec les gorges hélicoïdales qui constituent les indentations de la structure de crémaillère.

Cet agencement permet de réduire considérablement non seulement les dimensions et le poids du mécanisme — et donc son inertie —, mais également les coûts de fabrication et de montage en grande série.

Des caractéristiques additionnelles et d'autres avantages de la présente invention ressortiront de la description suivante d'un mode de réalisation, donné à titre illustratif mais nullement limitatif, faite en relation avec les dessins annexés, sur lesquels:

la figure 1 est une vue schématique en coupe longitudinale d'un mécanisme de direction assistée selon l'invention;

la figure 2 est une vue en coupe transversale suivant la ligne II-II de la figure 1;

la figure 3 est une vue en coupe transversale suivant la ligne III-III de la figure 1; et

les figures 4 et 5 représentent schématiquement les caractéristiques géométriques des unités de recirculation de billes intégrées à la structure d'écrou solidaire du rotor du moteur électrique d'assistance.

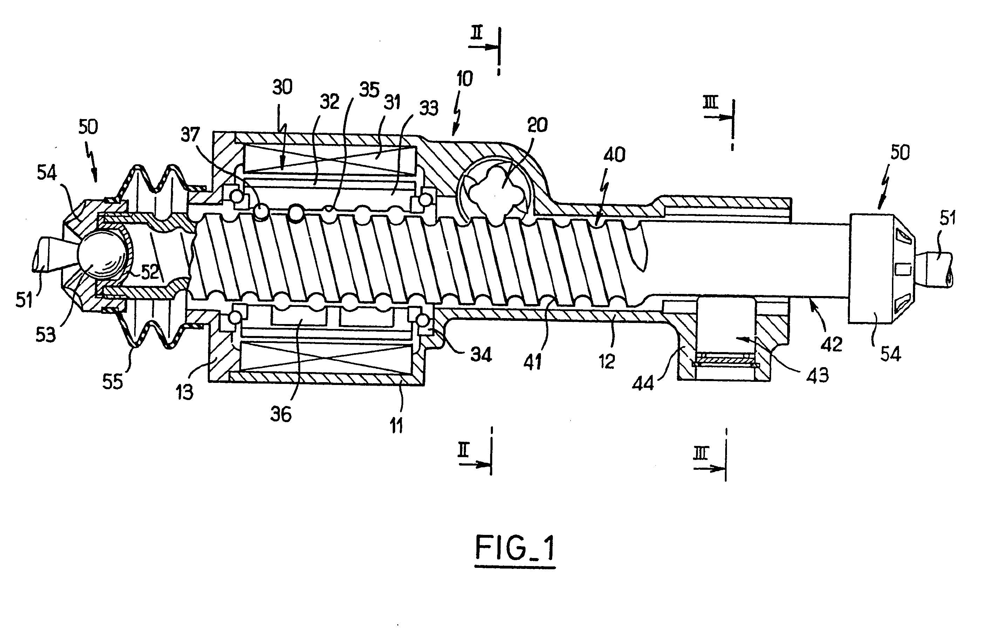

Le mécanisme de direction assistée électrique représenté sur les figures 1 à 5 comprend un boîtier de direction, généralement désigné par la référence 10, réalisé par exemple en fonderie et comprenant une partie de corps principal 11 d'allure généralement cylindrique prolongée, d'un côté, par une partie tubulaire 12 et fermée, à l'opposé de cette dernière, par un couvercle annulaire 13. A la jonction entre la partie de corps principal 11 et le prolongement tubulaire 12, le boîtier 10 forme un logement tubulaire transversal 14 dans lequel est monté tourillonnant un ensemble d'entraînement constitué d'un pignon 20 et d'un élément d'arbre d'entrée 21 destiné à être relié au volant de direction d'un véhicule. Dans la partie de corps principal 11 est installé un moteur électrique, généralement désigné par la référence 30 et comprenant un stator cylindrique 31 monté dans le corps 11 et un ensemble coaxial d'un rotor 32 et d'une structure d'écrou tubulaire centrale 33, cet ensemble tournant intérieur étant supporté à rotation dans le boîtier 10 et le couvercle 13 par des roulements tels que 34. Une structure de crémaillère, généralement désignée par la référence 40, s'étent coaxialement dans le prolongement tubulaire 12 du boîtier 10 et l'ensemble tournant 32-33 et se prolonge de part et d'autre du boîtier 10, les extrémités axialement opposées de la structure de crémaillère 40 étant chacune pourvu d'un moyen de connexion articulée 50 à des biellettes 51 d'un système d'orientation de roues directionnelles du véhicule.

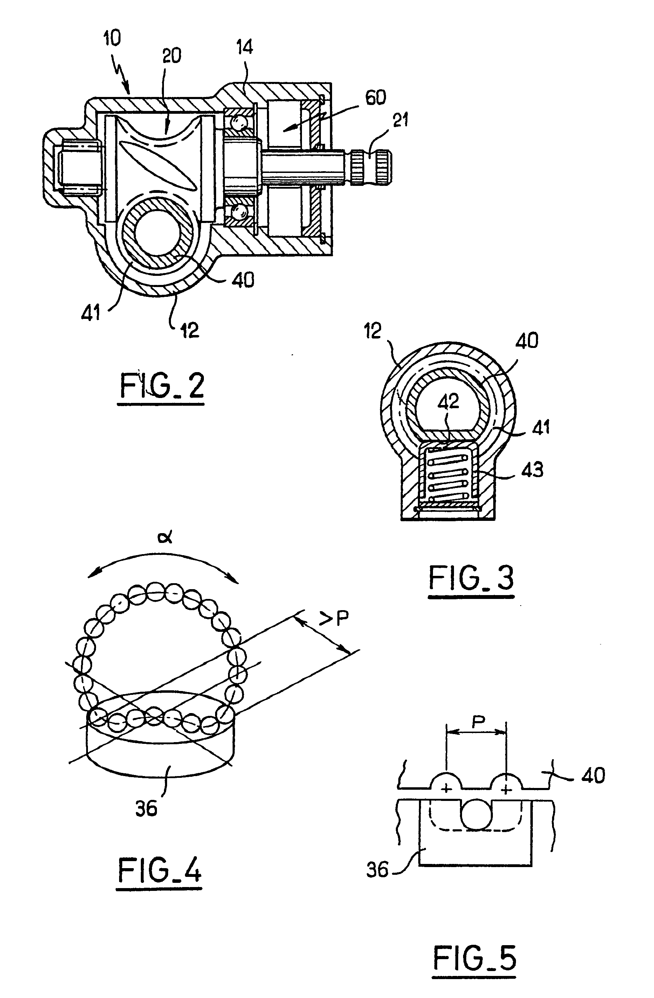

Comme on le voit bien sur la figure 1, la structure de crémaillère 40 est réalisée par estampage d'un tube creux de façon à présenter, sur une majeure partie de sa longueur s'étendant dans la partie de corps principal 11 du boîtier 10, des gorges hélicoïdales périphériques 41. L'extrémité de la structure de crémaillère 40 opposée au moteur électrique 30 et s'étendant au-delà, vers l'extérieur, du prolongement tubulaire 12 du boîtier 10, présente par contre une paroi périphérique lisse généralement cylindrique mais avec un plat longitudinal 42 destiné à coopérer avec un poussoir élastique 43 monté transversalement dans un bossage 44 de l'extrémité du prolongement tubulaire 12 du boîtier 10. De cette façon, du fait de la coopération entre le plat 42 et le poussoir élastique 43, la structure de crémaillère 40 peut coulisser longitudinalement dans le boîtier 10 sans toutefois pouvoir tourner de son axe propre, qui est également l'axe du moteur électrique 30. La structure d'écrou centrale 33 solidaire du rotor 32 comporte des gorges hélicoïdales 35 et au moins une unité de recirculation de billes 36 (représentée également sur les figures 3 et 5) pour des billes d'entraînement 37 coopérant à la fois avec les gorges intérieures de l'écrou 33 et les gorges extérieures de la structure de crémaillère 40 de façon à convertir le mouvement de rotation du rotor 32 en un mouvement de translation de la structure de crémaillère 40. Comme représenté sur les figures 4 et 5, chaque unité de recirculation de billes 36 forme, sur ses surfaces intérieures, un chenal de recirculation tortueux de largeur, en vue longitudinale, égale au pas P des gorges hélicoïdales 41 et 35, et ayant une longueur supérieure audit pas P pour recirculer les billes ayant accompli un trajet hélicoïdal sur une développée d'angle $\alpha$ égale à environ 300°.

Conformément à un aspect de l'invention, le pignon d'entraînement 20 est, comme on le voit sur la figure 2, un pignon globoïde à profil Novikof tel que décrit par exemple dans le volume 179, n° 30 de PROC INSTN MECH ENGRS 1964-1965 page 931 et suivantes, engrenant directement avec les gorges hélicoïdales 41 de recirculation de billes de la structure de crémaillère 40.

Comme on le voit sur la figure 2, dans le logement tubulaire transversal 14 du boîtier 10 est disposé, associé à l'élément d'arbre d'entrée 21, un moyen de capteur ou transducteur 60 actionnnable, en fonction de la rotation de l'arbre d'entrée 21 dans l'une ou l'autre direction, pour commander sélectivement le moteur électrique 30 en fonction du sens et de l'amplitude de la rotation de l'arbre d'entrée 21. Typiquement, le moyen de capteur 60 est un capteur de mesure de couple à magnétostriction tel que décrit dans l'édition d'octobre 1969 de «Instrumentation technology», page 95 et suivantes.

Comme représenté sur la figure 1, sur chaque extrémité de la structure tubulaire de crémaillère 40 est installé un siège 52 pour une rotule 53 à l'extrémité de la biellette 51, le siège 52 étant maintenu en place par un capuchon 54 vissé sur l'extrémité filetée extérieurement de la crémaillère 40. Un soufflet d'étanchéité 55 est avantageusement prévu au moins entre le couvercle 13 et le capuchon adjacent 54.

## Revendications

1. Mécanisme de direction assistée électrique pour véhicule, comprenant: dans un boîtier de direction (10), une structure de crémaillère (40), destinée à être reliée à un système d'orientation de roues directionnelles du véhicule, un pignon (20) couplé à un organe rotatif d'entrée (21) et engrenant avec des indentations de la structure de crémaillère (40), et un moteur électrique rotatif d'assistance (30) ayant un organe de sortie (32) coopérant avec des gorges hélicoïdales (41) formées sur une partie cylindrique de la structure de crémaillère via un mécanisme à écrou tournant (33) et à circuit de billes (36), pour déplacer la structure de crémaillère, et un moyen de capteur (60) sensible à l'actionnement de l'organe d'entrée (21) pour commander sélectivement le moteur électrique (30), caractérisé en ce que le pignon (20) est un pignon globoïde engrenant aves les gorges hélicoïdales (41) qui constituent les indentations de la structure de crémaillère (40).

2. Mécanisme selon la revendication 1, caractérisé en ce qu'il comporte, dans le boîtier (10), des moyens élastiques (43) coopérant avec la structure de crémaillère (40) pour l'empêcher de tourner autour de son axe.

3. Mécanisme selon la revendication 1 ou la revendication 2, caractérisé en ce que la structure de crémaillère (40) présente une configuration générale cylindrique.

4. Mécanisme selon la revendication 2 ou la revendication 3, caractérisé en ce que les moyens élastiques comprennent un poussoir (43) sollicité transversalement pour coopérer en appui contre un plat longitudinal (42) de la structure de crémaillère.

5. Mécanisme selon la revendication 4 ou la revendication 4, caractérisé en ce que la structure de crémaillère (40) est réalisée à partir d'un tube.

6. Mécanisme selon la revendication 5, caractérisé en ce que la structure de crémaillère (40) est façonnée par estampage.

7. Mécanisme selon l'une des revendications précédentes, caractérisé en ce que le pignon globoïde (20) et l'organe d'entrée (21) sont montés tourillonnant dans le boîtier (10) au voisinage de l'organe de sortie (32) du moteur électrique (30).

8. Mécanisme selon la revendication 7, caractérisé en ce que le moyen de capteur (60) est associé à l'organe d'entrée (21).

## Patentansprüche

1. Elektrischer Servolenkungsmechanismus für ein Fahrzeug, bei dem in einem Lenkgehäuse (10) vorgesehen sind: eine Zahnstange (40), die mit einem Radlenksystem des Fahrzeuges verbindbar ist, einem Zahnrad (20), das mit einem Eingangsdrehkörper (21) gekoppelt ist und mit Zahnlücken der Zahnstange (40) kämmt und ein elektrischer Servodrehantrieb (30) mit einem Abtriebsteil (32), das mit schraubenförmigen Nuten (41) an einem zylindrischen Abschnitt der Zahnstange über einen umlaufenden Muttermechanismus (33) und einen Kugelkreislauf (36) zusammenwirkt, um die Zahnstange zu verschieben, sowie ein Empfänger (60), der auf die Betätigung des Eingangsteiles (21) anspricht, um den elektrischen Motor (30) wahlweise zu betätigen, dadurch gekennzeichnet, dass das Zahnrad (20) ein Globoid-Zahnrad ist, das mit den schraubenförmigen Nuten (41) kämmt, die die Zahnlücken der Zahnstange (40) bilden.

2. Mechanismus nach Anspruch 1, dadurch gekennzeichnet, dass er im Gehäuse (10) elastische Mittel (43) aufweist, die mit der Zahnstange (40) zusammenwirken, um sie gegen eine Drehung um ihre Achse zu sichern.

3. Mechanismus nach Anspruch 1 oder 2, dadurch gekennzeichnet, dass die Zahnstange (40) eine ungefähr zylindrische Konfiguration hat.

4. Mechanismus nach Anspruch 2 oder 3, dadurch gekennzeichnet, dass die elastischen Mittel einen Stössel (43) umfassen, der in Querrichtung in Anlage an eine längsverlaufende Abflachung (42) der Zahnstange vorgespannt ist.

5. Mechanismus nach Anspruch 3 oder 4, dadurch gekennzeichnet, dass die Zahnstange (40) aus einem Rohr hergestellt ist.

6. Mechanismus nach Anspruch 5, dadurch gekennzeichnet, dass die Zahnstange (40) durch Gesenkschmieden geformt ist.

7. Mechanismus nach einem der vorhergehenden Ansprüche, dadurch gekennzeichnet, dass das Globoid-Zahnrad und das Eingangsteil (21) im Gehäuse (10) benachbart zum Abtriebsteil (32) des elektrischen Motors (30) drehbar gelagert sind.

8. Mechanismus nach Anspruch 7, dadurch gekennzeichnet, dass der Empfänger (30) dem Eingangsteil (21) zugeordnet ist.

## Claims

1. An electric servo steering mechanism for a vehicle, comprising within a steering casing (10) a rack structure (40) adapted to be connected to a wheel steering system of the vehicle, a pinion (20) coupled to a rotary input member (21) and in engagement with indentations of the rack structure (40), and an electric rotary servo motor (30) having an output member (32) cooperating with helical grooves (41) formed on a cylindrical portion of the rack structure via a rotary nut mechanism (33) and a ball circuit (36) for displacing the rack structure, and receiver means (60) responsive to the actuation of the input member (21) to selectively actuate the electric motor (30), characterized in that the pinion (20) is a globoidal pinion in engagement with the helical grooves (41) which constitute the indentations of the rack structure (40).

2. Mechanism according to claim 1, characterized in that it comprises, within the casing (10), resilient means (43) cooperating with the rack structure (40) for preventing it from rotating about its axis.

3. Mechanism according to claim 1 or claim 2, characterized in that the rack structure (40) is of a generally cylindrical configuration.

4. Mechanism according to claim 2 or claim 3, characterized in that the resilient means comprise a push member (43) transversely biased to cooperate in abutting engagement with a longitudinal flat (42) of the rack structure.

5. Mechanism according to claim 3 or claim 4, characterized in that the rack structure (40) is made from a tube.

6. Mechanism according to claim 5, characterized in that the rack structure (40) is shaped by stamping.

7. Mechanism according to any one of the preceeding claims, characterized in that the globoidal pinion (20) and the input member (21) are rotatably mounted within the casing (10) adjacent the output member (32) of the electric motor (30).

8. Mechanism according to claim 7, characterized in that the receiver means (60) is associated with the input member (21).

FIG_1

0 124 418

FIG_2

FIG_3

FIG_4

FIG_5

7